Europäisches Patentamt

European Patent Office

Office européen des brevets

(19)

(11) Veröffentlichungsnummer: **0 310 776 B1**

# (12) EUROPÄISCHE PATENTSCHRIFT

(45) Veröffentlichungstag der Patentschrift: **30.12.92**

(21) Anmeldenummer: **88112437.4**

(22) Anmeldetag: **01.08.88**

(51) Int. Cl.5: **G01P 3/488**, B60C 23/04, G08C 17/00

(54) **Einrichtung zur Signalübertragung von einem Drehteil auf ein bezüglich des Drehteils drehfestes Teil insbesondere von einem Fahrzeugrad auf das Fahrzeug.**

(30) Priorität: **24.09.87 DE 3732078**

(43) Veröffentlichungstag der Anmeldung:
**12.04.89 Patentblatt 89/15**

(45) Bekanntmachung des Hinweises auf die Patenterteilung:
**30.12.92 Patentblatt 92/53**

(84) Benannte Vertragsstaaten:
**DE ES FR GB IT SE**

(56) Entgegenhaltungen:
**EP-A- 0 117 172**
**DE-C- 2 813 058**
**FR-A- 2 526 953**
**US-A- 3 654 601**

(73) Patentinhaber: **WABCO Westinghouse Fahrzeugbremsen GmbH**
**Am Lindener Hafen 21 Postfach 91 12 80**
**W-3000 Hannover 91(DE)**

(72) Erfinder: **Höfler, Siegfried, Dipl.-Ing.**
**Kleine Pfahlstrasse 8**
**W-3000 Hannover 1(DE)**
Erfinder: **Singbartl, Günther, Ing. (grad.)**
**Körtingstrasse 3**
**W-3000 Hannover 1(DE)**
Erfinder: **Schmidt, Reinhard, Dipl.-Ing.**
**Wiesenstrasse 1**
**W-3160 Lehrte(DE)**

(74) Vertreter: **Schrödter, Manfred**
**WABCO Westinghouse Fahrzeugbremsen GmbH Am Lindener Hafen 21 Postfach 91 12 80**
**W-3000 Hannover 91(DE)**

## Beschreibung

Die Erfindung betrifft eine Einrichtung zur Signalübertragung gemäß dem ersten Teil des Patentanspruchs 1 bzw. 2.

Eine derartige Einrichtung zur Signalübertragung von einem Fahrzeugrad auf das Fahrzeug ist durch die DE-PS 28 13 058 vorbekannt. Bei der vorbekannten Einrichtung wird durch einen Sensor ein mit dem Fahrzeugrad umlaufendes als Zahnkranz ausgebildetes und als Geber verwendetes Polrad abgetastet und ein der Geschwindigkeit des Fahrzeugrades entsprechendes erstes Sensorsignal erzeugt. Ein zweites Sensorsignal wird durch ein Stellglied erzeugt, das im Bereich der Zähne des Gebers angeordnet und durch eine Bewegung des Stellgliedes relativ zu einem dem Stellglied benachbarten Bereich des Gebers auf den Sensor zu verstellbar ist. Die Verstellung des Stellgliedes erfolgt durch eine Veränderung des Reifendruckes.

Das Stellglied besteht aus einem ferromagnetischen Material, das im Anzeigefall eine Zahnlücke des Zahnkranzes ausfüllt, so daß dem Sensor im Wirkbereich des Stellgliedes ein gegenüber den übrigen Zähnen des Zahnkranzes um ein mehrfach verbreiterter Zahn als abzutastendes Element simuliert wird. Das hierdurch erzeugbare zweite Sensorsignal ist jedoch nur dann hinreichend ausgeprägt und als ein das erste Sensorsignal veränderndes Störsignal fehlerfrei verwertbar, wenn die Zahnlücke durch das Stellglied weitgehend ausgefüllt wird. Dies gilt sowohl für die Füllung der Zahnlücke in Längsrichtung auf die dem Sensor zugewandte Stirnfläche des Polrades zu als auch für die Füllung des Querschnittes der Zahnlücke. Durch Fertigungstoleranzen bedingte Luftspalten im Querschnitt zwischen dem Stellglied und der Zahnlücke, sowie durch einen geringfügigen Rückstand des Stellgliedes gegenüber dem Arbeitsluftspalt zwischen dem Sensor und dem Polrad, kann das zweite Sensorsignal stark abgeschwächt werden oder ganz ausbleiben.

Das erste Sensorsignal entspricht einer Sinusschwingung mit einer Charakteristik, die durch die Umfangsgeschwindigkeit des Polrades, bzw. durch die an dem Sensor vorbeilaufenden Zähne und Zahnlücken des Zahnkranzes bestimmt ist. Hierbei werden obere und untere Spannungsspitzen, bzw. Scheitelpunkte der Sinusschwingung durch den Sensorbereich durchfahrende Zahnkanten gebildet. Die auf der 0-Achse (Nulldurchgang) der Sinusschwingung liegenden Wendepunkte werden durch den Sensorbereich passierende Zahnmitten und Mitten der Zahnlücken gebildet. Das erste Sensorsignal hat im Nulldurchgang einen steilen Verlauf der Sinusschwingung.

Das zweite Sensorsignal, das durch einen durch das Stellglied mehrfach verbreiterten Zahn simuliert wird, verändert unter den vorerwähnten optimalen Einbaubedingungen des Stellgliedes das erste Sensorsignal zu einer sattelartigen Auslenkung mit einem flachen Schwingungsverlauf im Bereich des Nulldurchgangs. Dies hat zur Folge, daß die auf das erste Sensorsignal mit einem steilen Schwingungsverlauf im Nulldurchgang abgestimmte Auswerteelektronik das zweite flach verlaufende Sensorsignal in Abhängigkeit von der Umfangsgeschwindigkeit des Polrades mit mehr oder weniger großen Meßschwankungen behaftet registriert. Die vorerwähnten Meßschwankungen können, wenn sie im Toleranzfeld des Meßbereichs liegen, oder sich diesem nähern, zu Fehlsignalen führen.

Der Erfindung liegt deshalb die Aufgabe zugrunde, eine Einrichtung der eingangs erwähnten Art so zu verbessern, daß im Vergleich mit der eingangs erwähnten Einrichtung, die Auswertbarkeit des zweiten Sensorsignals durch die Auswertelektronik verbessert ist.

Diese Aufgabe wird durch die in den Patentansprüchen 1 und 2 angegebenen Ausführungen der Erfindung gelöst. Weiterbildungen und vorteilhafte Ausführungsbeispiele sind in den abhängigen Ansprüchen angegeben.

Die Erfindung hat den Vorteil, daß auch bei relativ großen Einbautoleranzen des Stellgliedes zum Polrad, sowie durch einen Rückstand des Stellgliedes gegenüber dem Arbeitsluftspalt des Sensors, das zweite Sensorsignal nicht wesentlich beeinträchtigt ist.

Ein weiterer Vorteil ergibt sich daraus, daß das Stellglied in einem am Polrad befindlichen geschlossenen Gehäuse angeordnet werden kann und somit nicht den am Fahrzeug durch Spritzwasser, Staßenschmutz oder evtl. Vereisung erschwerten Betriebsbedingungen, die zu einem Festsetzen des Stellgliedes führen könnten, ausgesetzt ist.

Die Erfindung ist auch bei Einrichtungen anwendbar, bei denen anstelle des den Sensorbereich durchlaufenden Zahnkranzes ein Segment oder mehrere Segmente als Signalgeber Verwendung finden.

Aus der US-A-3 654 601 ist eine Reifendrucküberwachungseinrichtung bekannt, die sich im wesentlichen aus zwei am Fahrzeugrad angeordneten Permanentmagneten und einem mit den Permanentmagneten zusammen wirkenden und auf ein magnetisches Signal reagierenden Schalter zusammensetzt. Jeder der beiden Permanentmagneten ist in einem Gehäuse gegen die Kraft einer Feder verschiebbar angeordnet.

Bei Beaufschlagung des Gehäuseinnenraumes mit Druckmittel aus dem Reifen des Rades wird der Permanentmagnet gegen die Kraft der Feder in Richtung vom Schalter wegbewegt und in dieser Position gehalten, solange der Druck im Reifen seinen bestimmen Wert nicht unterschreitet. Sinkt der Druck im Reifen ab so wird der Permanentmagnet mittels der Kraft der Feder in Richtung auf den Schalter zubewegt, wodurch bewirkt wird, daß der Schalter einen Schaltvorgang ausführt, der eine Anzeigeeinrichtung, aktiviert.

Bei dieser bekannten Reifendrucküberwachungseinrichtung wird jedoch nicht ein Zahnrad verwendet, welches mit einem Permanentmagneten zusammen wirkt, und zusätzlich zur Sensierung der Radgeschwindigkeit bei einem mit einem Antiblockierregelsystem ausgerüsteten Fahrzeug dienen kann.

Die Erfindung wird anhand eines Ausführungsbeispiels, das in der Zeichnung dargestellt ist, näher erläutert.

Es zeigen:

**Figuren 1 und 2**
eine Einrichtung zur Signalübertragung mit einer Polrad/Sensor-Kombination,

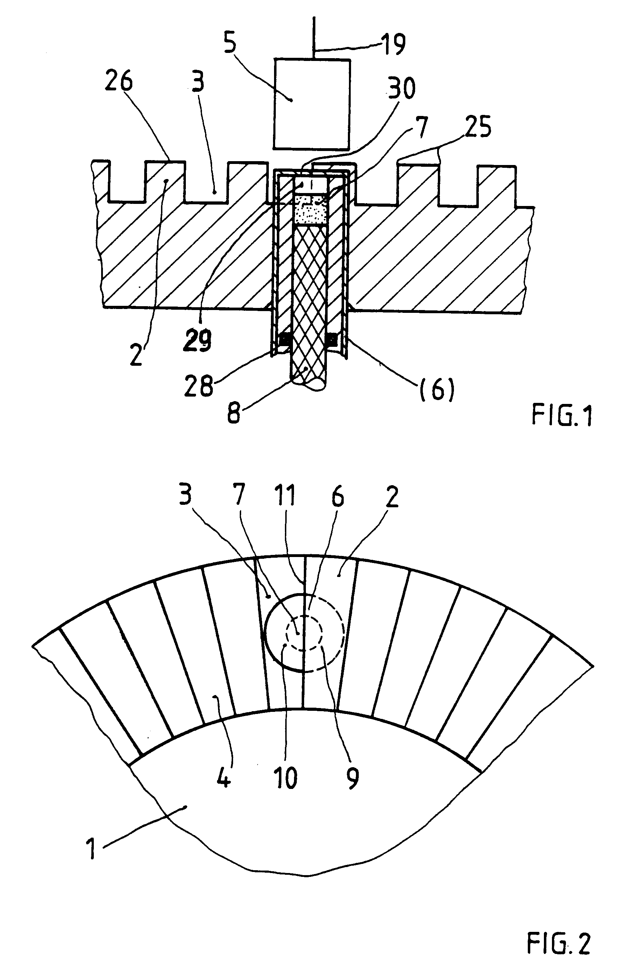

**Figuren 3 und 4**
eine Variante der Einrichtung gemäß der Figuren 1 und 2,

**Fig. 5**
eine graphische Darstellung von Sensorsignalen der Einrichtung gemäß den Figuren 1 und 2,

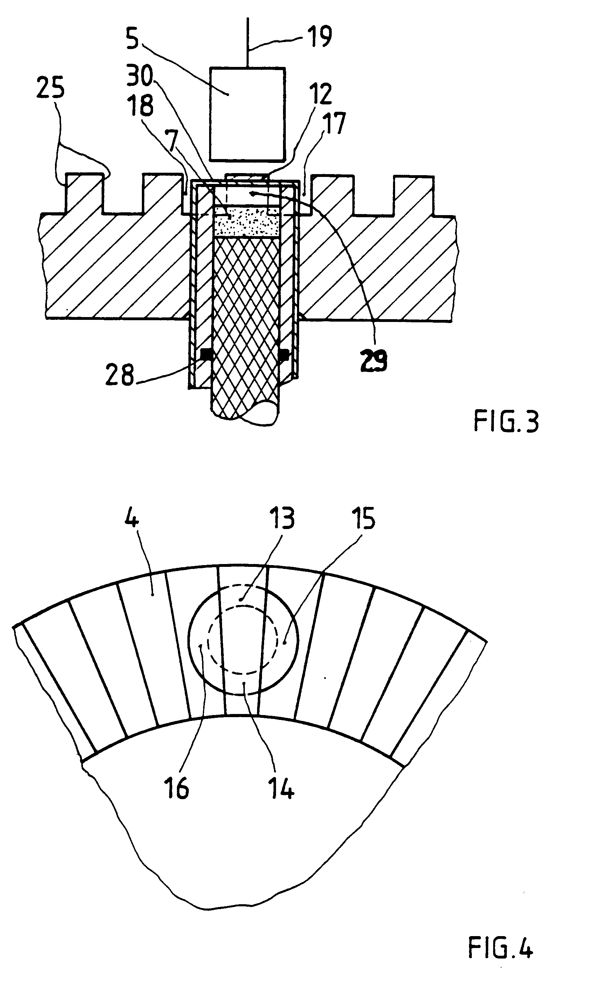

**Fig. 6**
eine graphische Darstellung von Sensorsignalen der Einrichtung gemäß den Figuren 3 und 4,

**Fig. 7**
eine graphische Darstellung von Sensorsignalen der eingangs beschriebenen, vorbekannten Einrichtung.

Die Einrichtungen gemäß den Figuren 1, 2 und 3, 4 sind geeignet Sensorsignale zu erzeugen, die mittels einer dem Sensor nachgeschalteten Auswerteeinrichtung auswertbar sind.

Die Figuren 1 und 2 zeigen einen Ausschnitt eines mit Zähnen versehenen Gebers (1), der konzentrisch sur Radachse an einem Fahzeugrad befestigt und mit diesem umlaufend angeordnet ist. Der Geber (1) ist mit Zähnen (2) und Zahnlücken (3) versehen, die einen geschlossenen Zahnkranz (4) bilden. Ein bezüglich des Gebers (1) feststehender Sensor (5) ist dem Zahnkranz (4) gegenüberliegend so angeordnet, daß bei einer Drehung des Gebers (1) die Zähne (2) und die Zahnlücken (3) den Wirkungsbereich des Sensors (5) durchlaufen.

In den Zahnkranz (4) ist ein aus einem nicht magnetisierbaren Material bestehendes Gehäuse (6) eingelassen und mit dem Zahnkranz (4) verbunden. Das Gehäuse (6) weist eine Kammer (29) auf, in der ein aus einem Dauermagneten gebildetes oder mit einem Dauermagneten versehenes Stellglied (7) angeordnet ist. Das Stellglied (7) ist in Richtung auf den Sensor (5) zu oder von dem Sensor (5) weg bewegbar. Die Betätigung des Stellgliedes (7) erfolgt durch einen Verstellmechanismus (8), der mit dem Stellglied (7) in Wirkverbindung steht und dessen Verstellbewegung durch ein von dem Fahrzeugrad ausgehendes Signal, z.B. hervorgerufen durch eine Veränderung des Reifendruckes auslösbar ist. Das Stellglied (7) ist im Zahnkranz (4) so angeordnet, daß es bei einer Drehung des Gebers (1) den Wirkungsbereich des Sensors (5) durchlaufen kann.

Das Stellglied (7) befindet sich in unbetätigtem Zustand in einem bezüglich des Sensors (5) vorgegebenen Mindestabstand, in der das Magnetfeld des Stellgliedes (7) durch den Sensor (5) nicht wahrnehmbar ist. Bei Auftreten des vorerwähnten Signals erfolgt durch den Verstellmechanismus (8) eine Verstellung des Stellgliedes (7) auf den Sensor (5) zu in eine Anzeigestellung, relativ zu einem dem Stellglied (7) benachbarten Bereich des Zahnkranzes (4), in der das Magnetfeld des Stellgliedes (7) durch den Sensor (5) wahrnehmbar ist.

Gemäß den Figuren 1 und 2 ist das Stellglied mit seinem Querschnitt so angeordnet, daß die dem Stellglied benachbarten Bereiche (9) und (10) des Zahnkranzes (4) durch einen Teil des Zahnes (2) und durch einen Teil der Zahnlücke (3) gebildet sind. Der Querschnitt des Stellgliedes (7) kann auch symmetrisch zu einer Zahnflanke (11) des Zahnes (2) angeordnet sein, so daß die dem Stellglied (7) benachbarten Bereiche (9) und (10) zu gleichen Teilen durch einen Teil des Zahnes (2) und einen Teil der Zahnlücke (3) gebildet sind.

Die Figuren 3 und 4 stellen eine alternative Einbauvariante des Stellgliedes (7) im Zahnkranz (4) zu den Figuren 1 und 2 dar. Hier ist der Querschnitt des Stellgliedes (7) zu einem Zahn (12) des Zahnkranzes (4) so angeordnet, daß die dem Stellglied (7) benachbarten Bereiche des Zahnkranzes (4) durch die Teile (13) und (14) des Zahnes (12) und durch die Teile (15) und (16) der Zahnlücken (17) und (18) gebildet sind. Bei einer symmetrischen Anordnung des Querschnittes des Stellgliedes (7) zum Zahn (12) sind die dem Stellglied (7) benachbarten Bereiche des Zahnkranzes (4) zu gleichen Teilen (13, 14) des Zahnes (12) und zu gleichen Teilen (15, 16) der Zahnlücken (17, 18) gebildet.

Das Stellglied (7) ist in dem Gehäuse (6) gekapselt untergebracht. Die Kammer (29) ist durch eine dem Gehäuse (6) zugeordnete Dichtung (28) gegenüber der Atmosphäre abgedichtet. Die Kammer (29) ist in Richtung auf den Sensor (5) zu durch eine Stirnwand (30) des Gehäuses (6) verschlossen. Hierdurch ist das Stellglied (7) gegen am Fahrzeug auftretende Umwelteinflüsse, die die Betriebssicherheit beeinträchtigen könnten, geschützt.

Der Sensor (5) ist über eine elektrische Leitung (19) mit einer nicht dargestellten elektronischen Auswerteeinrichtung verbunden, in der ein durch den Geber (1) erzeugtes erstes Sensorsignal (20) und ein vom Magnetfeld des Stellgliedes erzeugtes zweites Sensorsignal (21, 22) auswertbar sind.

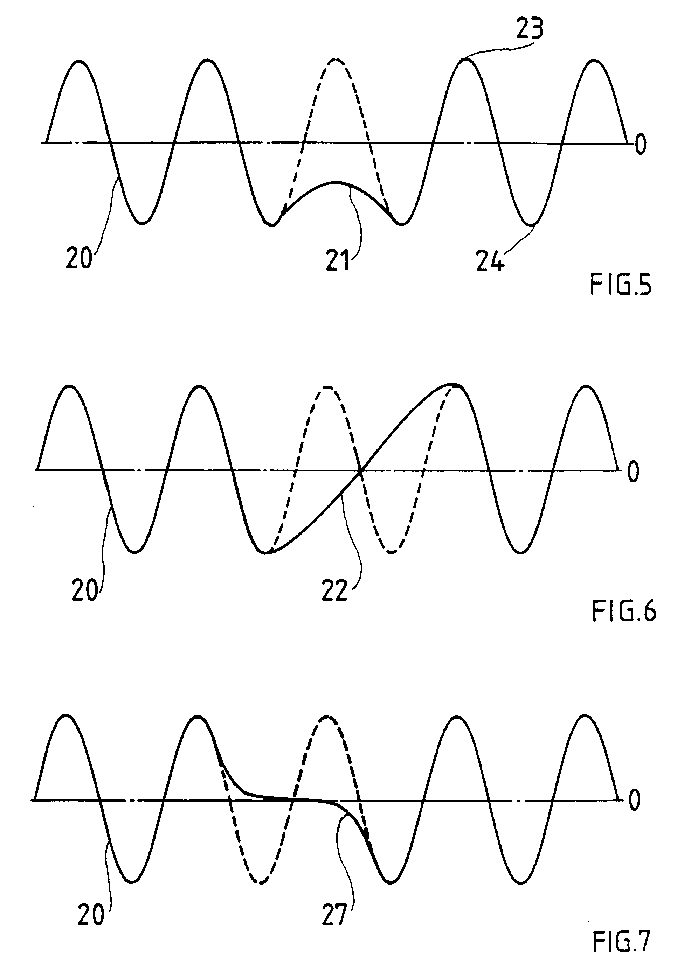

In den Figuren 5 und 6 ist das erste Sensorsignal (20) dargestellt, das in seiner Charakteristik einem Sinussignal entspricht, welches durch die Umfangsgeschwindigkeit des Polrades, bzw. durch die an dem Sensor (5) vorbeilaufenden Zähne (2) und Zahnlücken (3) bestimmt ist. Die oberen und unteren Spannungsspitzen (23) und (24) des Sinussignals (20) sind durch den Sensor (5) durchlaufende Zahnkanten (25) gebildet. Das Sinussignal (20) hat im Bereich der 0-Achse, d.h. bei abgefallener Spannung, einen steilen Durchgang. Die Spannungsabfälle im Bereich der 0-Achse sind durch die den Sensorbereich durchlaufenden Kopfflächen (26) der Zähne (2) und der Zahnlücken (3) bestimmt.

Durch die Anordnung des Stellgliedes (7) bezüglich der Zahnkante (25) des Zahnes (2) gemäß den Figuren 1 und 2 erfolgt die Einwirkung des zweiten Sensorsignals (21) auf das erste Sensorsignal (20) im Bereich einer Spannungsspitze (23) des ersten Sensorsignals (20). Hierdurch erfährt das erste Sensorsignal (20) eine ausgeprägte Veränderung, die durch die Auswerteeinrichtung fehlerfrei registrierbar ist.

Die Fig. 6 zeigt alternativ eine ähnlich ausgeprägte und durch die Auswerteeinrichtung ebenfalls fehlerfrei wahrnehmbare Veränderung des ersten Sensorsignals (20) durch ein zweites Sensorsignal (22), das durch die über zwei Zahnkanten (25) wirkende Anordnung des Stellgliedes (7), gemäß den Figuren 3 und 4, bestimmt ist.

Durch die vorerwähnte Anordnung des Magnetfeldes des Stellgliedes (7) im Bereich der Zahnkanten (25), bzw. durch das Wirksamwerden des Magnetfeldes im Spannungsspitzenbereich (23, 24) des ersten Sensorsignals (20) kann das als Dauermagnet ausgebildete Stellglied (7) klein dimensioniert ausgeführt sein, so daß nur ein relativ schwaches Magnetfeld auftritt. Hierdurch wird die Gefahr einer möglichen Störung anderer elektronischer Einrichtungen des Fahrzeuges durch das mit dem Fahrzeugrad umlaufende Magnetfeld des Stellgliedes (7) stark reduziert.

Die Fig. 7 zeigt im Vergleich zu den Figuren 5 und 6 eine Darstellung von Sensorsignalen die der eingangs beschriebenen vorbekannten Einrichtung entsprechen. Das auch denen der Figuren 5 und 6 gleichende erste Sensorsignal (20) wird durch ein zweites Sensorsignal (27) beeinflußt. Dieses zweite Sensorsignal (27) entsteht durch das vorerwähnte simulieren eines mehrfach verbreiterten Zahnes durch ein ferromagnetisches Stellglied. Die durch das zweite Sensorsignal (27) erfolgende sattelartige Auslenkung des ersten Sensorsignals (20) bewirkt einen flachen Durchlauf des Signals im Bereich der 0-Achse, d.h. in einem Bereich, in dem die Spannung des ersten Sensorsignals (20) abgefallen ist. Hierdurch ergeben sich die eingangs erwähnten Nachteile der Auswertung durch die auf einen steilen Schwingungsverlauf im Nulldurchgang abgestimmte Auswerteeinrichtung.

**Patentansprüche**

1. Einrichtung zur Signalübertragung von einem Drehteil auf ein bezüglich des Drehteils drehfestes Teil insbesondere von einem Fahrzeugrad auf das Fahrzeug, mit folgenden Merkmalen:

   a) Es ist ein mit Zähnen versehener Geber (1) vorgesehen, der auf einer konzentrisch zur Achse des Drehteils verlaufenden Bahn mit dem Drehteil umlaufend angeordnet ist;

   b) es ist ein Sensor (5) vorgesehen, der bezüglich des Drehteils feststehend am Fahrzeug angeordnet ist;

   c) der Sensor (5) ist bezüglich des Gebers (1) so angeordnet, daß durch berührungsloses Abtasten der Zähne des Gebers durch den Sensor ein erstes Sensorsignal erzeugbar ist;

   d) der Geber (1) weist en Stellglied (7) auf, das im Bereich der Zähne des Gebers (1) angeordnet und von einer vorgegebenen Grundstellung ausgehend auf den Sensor (5) zu bewegbar ist;

   e) durch eine Lageveränderung des Stellgliedes (7), relativ zu einem dem Stellglied (7) benachbarten Bereich des Gebers (1) auf den Sensor (5) zu, ist durch den Sensor (5) ein zweites Sensorsignal erzeugbar, gekennzeichnet durch die folgenden Merkmale:

   f) das Stellglied (7) ist durch einen Dauermagneten gebildet oder mit einem Dauermagneten versehen, dessen in dem dem Stellglied (7) benachbarten Bereich des Gebers (1) wirksames Magnetfeld zur Erzeugung des zweiten Sensorsignals von dem Sensor (5) wahrnehmbar ist;

   g) der dem Stellglied (7) benachbarte Bereich des Gebers (1) ist durch einen Teil (9) eines Zahnes (2) und einen Teil (10) einer Zahnlücke (3) gebildet.

2. Einrichtung zur Signalübertragung von einem Drehteil auf ein bezüglich des Drehteils drehfestes Teil insbesondere von einem Fahrzeugrad auf das Fahrzeug, mit folgenden Merkmalen:

   a) Es ist ein mit Zähnen versehener Geber (1) vorgesehen, der auf einer konzentrisch zur Achse des Drehteils verlaufenden Bahn mit dem Drehteil umlaufend angeordnet ist;

   b) es ist ein Sensor (5) vorgesehen, der bezüglich des Drehteils feststehend am Fahrzeug angeordnet ist;

c) der Sensor (5) ist bezüglich des Gebers (1) so angeordnet, daß durch berührungsloses Abtasten der Zähne des Gebers durch den Sensor ein erstes Sensorsignal erzeugbar ist;

d) der Geber (1) weist ein Stellglied (7) auf, das im Bereich der Zähne des Gebers (1) angeordnet und von einer vorgegebenen Grundstellung ausgehend auf den Sensor (5) zu bewegbar ist;

e) durch eine Lageveränderung des Stellgliedes (7), relativ zu einem dem Stellglied (7) benachbarten Bereich des Gebers (1) auf den Sensor (5) zu, ist durch den Sensor (5) ein zweites Sensorsignal erzeugbar, gekennzeichnet durch die folgenden Merkmale:

f) das Stellglied (7) ist durch einen Dauermagneten gebildet oder mit einem Dauermagneten versehen, dessen in dem dem Stellglied (7) benachbarten Bereich des Gebers (1) wirksames Magnetfeld zur Erzeugung des zweiten Sensorsignals von dem Sensor (5) wahrnehmbar ist;

g) der dem Stellglied (7) benachbarte Bereich des Gebers (1) ist durch jeweils einen Teil (13, 14) eines Zahnes (12) und jeweils einen Teil (15, 16) der dem Zahn (12) benachbarten Zahnlücken (17, 18) gebildet.

3. Einrichtung nach Anspruch 1, dadurch gekennzeichnet, daß der dem Stellglied (7) benachbarte Bereich des Gebers (1) zu gleichen Teilen durch den Teil (9) des Zahnes (2) und dem Teil (10) der Zahnlücke (3) gebildet ist.

4. Einrichtung nach Anspruch 2, dadurch gekennzeichnet, daß der dem Stellglied (7) benachbarte Bereich des Gebers (1) durch jeweils einen Teil (13, 14) des Zahnes (12) und jeweils gleichen Teilen (15, 16) der dem Zahn (12) benachbarten Zahnlücken (17, 18) gebildet ist.

5. Einrichtung nach wenigstens einem der vorhergehenden Ansprüche, gekennzeichnet durch folgende Merkmale:

a) Es ist ein Gehäuse (6) aus nicht magnetisierbarem Material vorgesehen, das im Bereich der Zähne des Gebers (4) angeordnet und mit diesem verbunden ist;

b) das Gehäuse (6) weist eine Kammer (29) auf, in dem das Stellglied (7) und ein mit dem Stellglied (7) in Wirkverbindung stehender Verstellmechanismus (8) längsverschieblich angeordnet sind;

c) die Kammer (29) ist durch eine dem Gehäuse (6) zugeordnete Dichtung (28) gegenüber der Atmosphäre abgedichtet.

d) die Kammer (29) ist in Richtung auf den Sensor (5) zu durch eine Stirnwand (30) des Gehäuses (6) verschlossen.

6. Einrichtung nach den vorhergehenden Ansprüchen 1 bis 5, dadurch gekennzeichnet, daß der Geber (1) mit Zähnen versehen ist, die einen geschlossenen Zahnkranz bilden.

**Claims**

1. An apparatus for transmitting signals from a rotating part to a part that is fixed with respect to the rotating part, in particular from a vehicle wheel to the vehicle, having the following features:

a) a transmitter (1) equipped with teeth and arranged on a path running concentrically with the axis of the rotating part so as to rotate with the rotating part is provided;

b) a sensor (5) which is arranged fixedly on the vehicle with respect to the rotating part is provided;

c) the sensor (5) is arranged with respect to the transmitter (1) so that a first sensor signal is arranged to be generated by contact-free scanning of the teeth of the transmitter by the sensor;

d) the transmitter (1) has an actuator (7) which is arranged in the region of the teeth of the transmitter (1) and is arranged to be moved towards the sensor (5) starting from a predetermined initial position;

e) a second sensor signal is arranged to be generated by the sensor (5) as a result of a change in position of the actuator (7) towards the sensor (5) relative to a region of the transmitter (1) adjacent to the actuator (7);

characterized by the following features:

f) the actuator (7) is formed by a permanent magnet or is provided with a permanent magnet, the magnetic field of which effective in the region of the transmitter (1) adjacent to the actuator (7) is arranged to be detected by the sensor (5) to generate the second sensor signal;

g) the region of the transmitter (1) adjacent to the actuator (7) is formed by a part (9) of a tooth (2) and a part (10) of a tooth space (3).

2. An apparatus for transmitting signals from a rotating part to a part that is fixed with respect to the rotating part, in particular from a vehicle wheel to the vehicle, having the following features:

a) a transmitter (1) equipped with teeth and arranged on a path running concentrically with the axis of the rotating part so as to rotate with the rotating part is provided;

b) a sensor (5) which is arranged fixedly on the vehicle with respect to the rotating part is provided;

c) the sensor (5) is arranged with respect to the transmitter (1) so that a first sensor signal is arranged to be generated by contact-free scanning of the teeth of the transmitter by the sensor;

d) the transmitter (1) has an actuator (7) which is arranged in the region of the teeth of the transmitter (1) and is arranged to be moved towards the sensor (5) starting from a predetermined initial position;

e) a second sensor signal is arranged to be generated by the sensor (5) as a result of a change in position of the actuator (7) towards the sensor (5) relative to a region of the transmitter (1) adjacent to the actuator (7);

characterized by the following features:

f) the actuator (7) is formed by a permanent magnet or is provided with a permanent magnet, the magnetic field of which effective in the region of the transmitter (1) adjacent to the actuator (7) is arranged to be detected by the sensor (5) to generate the second sensor signal;

g) the region of the transmitter (1) adjacent to the actuator (7) is formed by part (13, 14) of a particular tooth (12) and part (15, 16) of the tooth spaces (17, 18) adjacent to the particular tooth (12).

3. An apparatus according to claim 1, characterized in that the region of the transmitter (1) adjacent to the actuator (7) is formed in equal parts by the part (9) of the tooth (2) and the part (10) of the tooth space (3).

4. An apparatus according to claim 2, characterized in that the region of the transmitter (1) adjacent to the actuator (7) is formed by part (13, 14) of the particular tooth (12) and equal parts (15, 16) of the tooth spaces (17, 18) adjacent to the particular tooth (12).

5. An apparatus according to at least one of the preceding claims, characterized by the following features:

a) a housing (6) of non-magnetizable material is provided, which is arranged in the region of the teeth of the transmitter (4) and is connected to the transmitter;

b) the housing (6) has a chamber (29) in which the actuator (7) and a displacement mechanism (8) that is in operative connection with the actuator (7) are arranged so as to be longitudinally displaceable;

c) the chamber (29) is sealed from the atmosphere by a seal (28) associated with the housing (6);

d) the chamber (29) is closed in the direction towards the sensor (5) by an end wall (30) of the housing (6).

6. An apparatus according to one of the preceding claims 1 to 5, characterized in that the transmitter (1) is provided with teeth which form a closed toothed ring.

**Revendications**

1. Dispositif pour la transmission de signaux d'une pièce rotative à une pièce qui ne tourne pas par rapport à la pièce rotative, en particulier d'une roue de véhicule au véhicule, ayant les particularités suivantes:

a) il comprend un générateur (1) pourvu de dents, qui est disposé pour tourner avec la pièce rotative suivant un trajet concentrique à l'axe de la pièce rotative;

b) il comprend un capteur (5) disposé fixe par rapport à la pièce rotative sur le véhicule;

c) le capteur (5) est disposé par rapport au générateur (1) de manière qu'un premier signal de capteur puisse être produit par l'exploration sans contact des dents du générateur par le capteur;

d) le générateur (1) comporte un organe piloté (7) disposé dans la zone des dents du générateur (1) et pouvant être approché du capteur (5) à partir d'une position de base préfixée;

e) le capteur (5) peut produire un second signal de capteur par suite d'un changement de position de l'organe piloté (7), en direction du capteur (5), par rapport à une région du générateur (1) voisine de l'organe piloté (7),

caractérisé en ce que:

f) l'organe piloté (7) est formé par un aimant permanent ou est pourvu d'un aimant permanent dont le champ magnétique agissant dans la région du générateur (1) voisine de l'organe piloté (7), peut être perçu par la capteur (5) en vue de la production du second signal de capteur;

g) la région du générateur (1) voisine de l'organe piloté (7) est formée par une partie (9) d'une dent (2) et une partie (10) d'un entredent (3).

2. Dispositif pour la transmission de signaux d'une pièce rotative à une pièce qui ne tourne pas par rapport à la pièce rotative, en particulier d'une roue de véhicule au véhicule, ayant les particularités suivantes:

a) il comprend un générateur (1) pourvu de dents, qui est disposé pour tourner avec la pièce rotative suivant un trajet concentrique à l'axe de la pièce rotative;

b) il comprend un capteur (5) disposé fixe par rapport à la pièce rotative sur le véhicule;

c) le capteur (5) est disposé par rapport au générateur (1) de manière qu'un premier signal de capteur puisse être produit par l'exploration sans contact des dents du générateur par le capteur;

d) le générateur (1) comporte un organe piloté (7) disposé dans la zone des dents du générateur (1) et pouvant être approché du capteur (5) à partir d'une position de base préfixée;

e) le capteur (5) peut produire un second signal de capteur par suite d'un changement de position de l'organe piloté (7), en direction du capteur (5), par rapport à une région du générateur (1) voisine de l'organe piloté (7),

caractérisé en ce que:

f) l'organe piloté (7) est formé par un aimant permanent ou est pourvu d'un aimant permanent dont le champ magnétique agissant dans la région du générateur (1) voisine de l'organe piloté (7), peut être perçu par le capteur (5) en vue de la production du second signal de capteur;

g) la région du générateur (1) voisine de l'organe piloté (7) est formée par deux parties (13, 14) d'une dent (12) et par une partie (15, 16) de chacun des deux entredents (17, 18) voisins de la dent (12).

3. Dispositif selon la revendication 1, caractérisé en ce que la région du générateur (1) voisine de l'organe piloté (7) est constituée à parts égales par la partie (9) de la dent (2) et la partie (10) de l'entre-dent (3).

4. Dispositif selon la revendication 2, caractérisé en ce que la région du générateur (1) voisine de l'organe piloté (7) est constituée par des parties égales (13, 14) de la dent (12) et par des parties égales (15, 16) des entredents (17, 18) voisins de la dent (12).

5. Dispositif selon au moins une des revendications précédentes, caractérisé en ce que:

a) il comprend un boîtier (6) en matériau non aimantable, qui est disposé dans la zone des dents du générateur (1) et est relié à celui-ci;

b) le boîtier (6) présente une chambre (29) dans laquelle l'organe piloté (7) et un mécanisme de déplacement (8) en liaison fonctionnelle avec cet organe sont disposés mobiles longitudinalement;

c) la chambre (29) est étanchée vis-à-vis de l'atmosphère par un joint (28) coordonné au boîtier (6);

d) la chambre (29) est fermée par une paroi d'extrémité (30) du boîtier (6) en direction du capteur (5).

6. Dispositif selon les revendications 1 à 5 précédentes, caractérisé en ce que le générateur (1) est pourvu de dents qui forment une couronne dentée fermée en elle-même.

FIG.1

FIG.2

FIG.3

FIG.4

9

FIG.5

FIG.6

FIG.7